# EUROPEAN PATENT APPLICATION

(11) **EP 0 679 681 A1**
(43) Date of publication of application: **02.11.1995**
(21) Application number: 95106132.4
(22) Date of filing: 24.04.1995
(51) Int. Cl.: C08J 9/00, C08J 9/14, C08G 18/28

(54) **Heat insulating foamed material and method for manufacturing the same**

(30) Priority: 27.04.1994 JP 89596/94; 09.09.1994 JP 215798/94
(71) Applicant: MATSUSHITA ELECTRIC INDUSTRIAL CO., LTD., Kadoma-shi, Osaka-fu, 571 (JP)
(72) Inventor: Hashida, Takashi, Miyakojima-ku, Osaka City, 534 (JP); Suzuki, Masa-aki, Joto-ku, Osaka City, 536 (JP); Inagaki, Fumihiro, Yodogawa-ku, Osaka City, 532 (JP); Kishimoto, Yoshio, Hirakata City, 573 (JP); Ueno, Takayoshi, Katano City, 576 (JP)
(74) Representative: Jung, Elisabeth, Dr.

(57) **Abstract**

A heat insulating foamed material is manufactured by concurrently mixing and blowing a polyurethane material, thereby to form a polyurethane resin composition comprising a multiplicity of closed cells containing at least one volatile compound having a boiling point of 150°C or lower and a molecular weight of 70 or larger, and a blowing agent; and fixing the reactive blowing agent in said closed cells thereby to obtain a foamed material whose closed cells are substantially filled with a vapor of said volatile compound at a vapor pressure of 1 mmHg or higher at 25°C.

## Description

### BACKGROUND OF THE INVENTION

### 1. Field of the Invention

The present invention relates to a heat insulating foamed material which can be applied to a refrigerator, freezer and the like, and a method for manufacturing the same.

### 2. Description of the Prior Art

Recently, environmental pollution or disruption such as depletion of ozone layer or global warming by chlorofluorocarbons (CFC substances) has been a social problem, and thus a reduction in or a complete abolishment of the use of particular CFC substances (such as trichloromonofluoromethane or the like), which is an important blowing agent used in manufacturing heat insulating foamed materials such as hard polyurethane foam.

In order to cope with this problem, the use of a material almost free from depletion of ozone layer, for instance, 1,1-dichloro-1-fluoroethane (HCFC-141b), 1,1-dichloro-2,2,2-trifluoroethane (HCFC-123) or the like, has been proposed as the blowing agent for manufacturing the polyurethane foam.

Further, another manufacturing process of the polyurethane foam which uses as the blowing agent a hydrocarbon, such as cyclopentane or the like which has only a small influence on the environmental pollution such as depletion of ozone layer, global warming, or the like is also well known. (For instance, Gerhard Heilig and Yoshinori Kihara: "Hard Urethane Foam Blown with Pentane", Proceedings of the Polyurethane International Forum in May, 1993, p.197). The proposed pentane has however a high boiling point and is relatively difficult to use for blowing. In addition, since other hydrocarbons including pentane are inflammable and are liable to remain in foamed materials, they still pose a problem of safety during manufacturing and for the molded heat insulating foamed material.

As a material that can solve the inflammability in addition to the global environmental concern or problem, another heat insulating foamed material produced in a manufacturing process using only water as a blowing agent has been under development, but this also remains insufficient for obtaining an excellent heat insulating property because of the high heat conductivity of carbon dioxide produced in the manufacturing process and confined in the closed cells.

If a mixture of hydrocarbon such as pentane and water is used in the blowing process, it will be possible to improve the blowing ability of the hydrocarbon, thereby to decrease the amount of hydrocarbon to be used, and to reduce the inflammability of the obtained heat insulating material. There is however a disadvantage that it cannot obtain a high heat insulating property because carbon dioxide comparable to the amount of the hydrocarbon remains in the closed cells.

Moreover, there is an attempt to improve the heat insulating property of the polyurethane foam by minimizing the size of the closed bells by an addition of fluorocarbon in the use of hydrochlorofluorocarbon as a blowing agent (Japanese Laid-Open Patent Publication No. Hei 5-186629).

As mentioned above, the blowing agents such as hydrocarbon and/or water owe less responsibility for the depletion of ozone layer and global warming problems. However, these agents are still disadvantageous because they cannot produce any heat insulating foamed material that simultaneously satisfies both the reduction in the inflammability and the sufficiently high heat insulating property.

### SUMMARY OF THE INVENTION

It is therefore a primary object of the present invention to provide a heat insulating foamed material excellent in both the heat insulating property and the nonflammability taking into account a reduction in loading the global environment.

The present invention provides a heat insulating foamed material having a multiplicity of closed cells in which a vapor of at least one volatile compound having a boiling point of 150°C or lower and a molecular weight of 70 or larger is filled at a pressure of 1mmHg or higher at 25°C, and inner wall surfaces of the closed cells comprise at least one member selected from the group consisting of
(A) a halogenated hydrocarbon chain in an end residue state or a branched chain state as a product of fixing a reactive blowing agent, and
(B) an organic carbonate compound as a product of fixing carbon dioxide, and a carbon dioxide fixation catalyst.

In the above-mentioned heat insulating foamed material, it is preferable that the organic carbonate compound is a cyclic carbonate, and that the carbon dioxide fixation catalyst is at least one member selected from the group consisting of a metal halide and an onium salt.

Further, it is preferable that the volatile compound filled in the closed cells is at least one member selected from the group consisting of a cyclic hydrocarbon having from 5 to 6 carbon atoms, a highly fluorinated or perfluorinated fluorohydrocarbon having from 3 to 7 carbon atoms, a fluorinated ether having from 3 to 8 carbon atoms, a fluorinated tertiary amine having from 3 to 6 carbon atoms, and an iodinated fluorohydrocarbon having from 1 to 4 carbon atoms.

A partial pressure of the carbon dioxide confined in the closed cells is preferably 50 mmHg or lower at 25°C.

Moreover, the vapor pressure of the volatile compound confined in the closed cells is preferably 100 mmHg or lower at 25°C.

The present invention also provides a method for producing a heat insulating foamed material comprising the steps of
concurrently mixing and blowing a polyurethane material (precursor), thereby to form a foamed polyurethane resin composition having a multiplicity of closed cells, containing at least one volatile compound having a boiling point of 150°C or lower and a molecular weight of 70 or larger and a reactive blowing agent, and
fixing the reactive blowing agent in the closed cells, thereby to obtain a foamed material, wherein inside spaces of the closed cells are substantially filled with a vapor of the volatile compound at a vapor pressure of 1 mmHg or higher at 25°C.

In the above-mentioned method for producing a heat insulating material, a combination of the reactive blowing agent and its fixation reaction is preferably at least one case selected from the group consisting of
(A) a combination of an organic halide as the reactive blowing agent and a reaction for forming a halogenated hydrocarbon chain in an end residue state or a branched chain state as the fixation reaction of the organic halide, and
(B) a combination of carbon dioxide as the reactive blowing agent and a reaction of the carbon dioxide with an epoxide compound in the presence of a catalyst for forming an organic carbonate compound as the fixation reaction of the carbon dioxide.

In one embodiment of the present invention, the organic halide is at least one compound selected from the group consisting of a halogenated tertiary alcohol and a halogenated amine, and the fixation reaction is a reaction of the organic halide with polyisocyanate to form a halogenated hydrocarbon chain.

In another embodiment of the present invention, the organic halide is a halide having at least one carbon-to-carbon unsaturated bond, and the fixation reaction is a polymerization reaction of the organic halide to form a hydrocarbon chain.

In a further embodiment of the present invention, the reactive blowing agent is encapsulated in microcapsules comprising cores of the reactive blowing agent itself and wall material of a thermoplastic resin, and is mixed with polyol.

In a preferred embodiment of the present invention, the boiling point of the volatile compound is 115°C or lower, and the amount of the volatile compound added to polyol is in a range of 0.1 - 0.4 mole/kg, and the volatile compound is filled in the closed cells at a vapor pressure of 100 mmHg or lower at 25°C.

While novel features of the invention are set forth in the preceding, the invention, both as to its organization and content, can be further understood and appreciated, along with other objects and features thereof, from the following detailed description and examples when taken in conjunction with the attached drawings.

### BRIEF DESCRIPTION OF THE DRAWINGS

FIG.1 is a schematic view showing the polyol composition used in the manufacturing process of the heat insulating foamed material of one embodiment in accordance with the present invention.

FIG.2 is a schematic view showing the polyol composition used in the manufacturing process of the heat insulating foamed material of the embodiment in accordance with the present invention.

FIG.3 is a schematic view showing a heat insulating foamed material obtained by one embodiment in accordance with the present invention.

FIG.4 is a schematic view showing fine particles whose surfaces are modified with carbon dioxide reactive groups having epoxide moieties in accordance with the present invention.

### DESCRIPTION OF THE PREFERRED EMBODIMENTS

Although polystyrene, phenolic resin and the like are available as a resin for constituting the heat insulating foamed material, polyurethane is particularly preferred in view of feasibility in controlling the size of the closed cells and in blowing while molding at the field of manufacturing. Thus, the following illustration is exclusively directed to the heat insulating foamed material manufactured by using a urethane reaction.

In the manufacturing process of the heat insulating foamed material in accordance with the present invention, it is important that a compound to be filled in the closed cells at its gas phase is different from a compound which performs the blowing function, and the process mainly comprises the following two steps.

In the first step, while a reaction for forming polyurethane which constitutes the heat insulating foamed material proceeds, the reactive blowing agent is vaporized by utilizing a heat generated by the reaction to perform the blowing function, or carbon dioxide as a reactive blowing agent is generated by a reaction of water, added as a blowing agent, with isocyanate to blow. At that time, the volatile compound also contributes to the blowing in a case of employing a volatile compound having a low boiling point.

In the second step, the above-mentioned reactive blowing agent is fixed with a time lapse from blowing.

The thus obtained heat insulating foamed material in accordance with the present invention has a structure having the following two characteristics. First, the heat insulating foamed material in accordance with the present invention is composed of resin foamed material having a multiplicity of closed cells. A first feature is that the inside spaces of the closed cells are filled with a small amount of vapor of the volatile compound in a reduced-pressure state, because the reactive blowing agent which has first performed its blowing function is then fixed on the inner surfaces of the closed cells. A second feature is that the reactive blowing agent is included in the heat insulating foamed material by being fixed as a solid or liquid product.

The volatile compound referred to herein is a compound having a boiling point of 150°C or lower and a molecular weight of 70 or larger, and having a vapor pressure in an equilibrium state at room temperature, regardless of its stable phase; solid, liquid or gas at room temperature, part of which is existing in its gaseous state. The reactive blowing agent referred to herein is a blowing agent that vaporizes from its condensed state due to elevation in temperature during blowing operation by heating or a heat generated by a chemical reaction, or that generates a gas by a chemical reaction, and thereafter the above-mentioned gas is fixed in the closed cells by a chemical reaction.

The major functions and features of the heat insulating foamed material in accordance with the present invention as well as the manufacturing method thereof will be summarized as follows.
1) Since the reactive blowing agent is fixed after the concurrent molding and blowing, it is possible to suppress the rise in the heat conductivity (lowering in the heat insulating property). Such deterioration may otherwise be caused by the reactive blowing agent of not so low heat conductivity, remaining in the closed cells in a large quantity. Further, the vapor of the volatile compound of a low heat conductivity, which approximately equals to the heat conductivity of cyclopentane having a molecular weight of 70 or higher, remains in the closed cells. It is therefore possible to obtain a heat insulating foamed material having a more excellent heat insulating property.
   In the heat insulating foamed material in accordance with the present invention, since the vapor pressure of the volatile compound in the closed cells is 1 mmHg or above at 25°C, and the influence of the impurity gas on the heat conductivity is not so great, compared with the case of vacuum heat insulation, it is possible to suppress the deterioration of the heat conductivity attributable to the impurity gas having a high heat conductivity to a minimum. Since the above-mentioned volatile compound is a volatile compound having a molecular weight of 70 or larger and a boiling point of 150°C or lower, it is possible for the volatile compound to have a saturation vapor pressure of 1 mmHg or higher at 25°C.
2) Since the blowing is mainly performed by the reactive blowing agent, a contribution of the volatile compound is not necessarily required for the blowing. Therefore, even if the boiling point of the volatile compound is high, the blowing process proceeds favorably. Further, since the blowing state becomes favorable even if the amount of the employed volatile compound is small, a reduction in the amount of the volatile compound becomes possible. As a result, the vapor pressure of the volatile compound contained in the heat insulating foamed material decreases. Therefore, even if the volatile compound is inflammable, the obtained heat insulating foamed material can be nonflammatory without deteriorating its heat insulating property. Moreover, even if the volatile compound is released in the air at the time of manufacturing and/or discarding the foamed material, the load on the global environment such as depletion of ozone layer is small.

In a foamed material obtained by employing the hydrocarbon of cyclopentane as the blowing agent, the partial pressure of cyclopentane in the closed cells is usually about 200 - 300 mmHg at 25°C. In contrast, according to the present invention, it is possible to make the vapor pressure of the volatile compound in the closed cells 100 mmHg or lower by reducing the amount of the employed volatile compound. Therefore, according to the present invention, it is possible to make the effects of reducing the inflammability and of reducing the load on the global environment remarkable.

In the foamed material in accordance with the present invention, a part of the reactive blowing agent remains unreacted. The vapor pressure of the remaining reactive blowing agent can however be made 50 mmHg at 25°C because the present invention can enables a high fixation rate of the reactive blowing agent and the reaction proceeds gradually with a lapse of time.

In the case of employing water and cyclopentane as the blowing agent for instance, although the ratio of the vapor pressure of carbon dioxide generated from water to the vapor pressure of cyclopentane is about 1/1 - 2/1, and the vapor pressure of carbon dioxide is greatly reduced to 50 mmHg or lower by fixing the carbon dioxide, the proportion of the carbon dioxide can be reduced to about 1/4, thereby to improve the heat insulating property.

Further, in view of the improvement in the fixation ratio of the reactive blowing agent, it is a particularly preferred scheme that the carbon dioxide generated by a reaction of water with polyisocyanate is first utilized for the blowing and then fixed on the wall surfaces of the closed cells as a carbonate compound. In this case, it is possible to reduce the carbon dioxide in the closed cells to about several mmHg or lower, which has lowered the heat insulating property in the prior art blowing process performed by the mixed blowing agent of hydrocarbon/water. In this manner, it is possible to easily obtain a heat insulating foamed material which simultaneously satisfies the requirements for the global environment, the safety, and the high heat insulating property.

Further, in the manufacturing method of the heat insulating foamed material in accordance with the present invention, it is a particularly preferred process, wherein the blowing is performed in an atmosphere of carbon dioxide or any gas having a low heat conductivity and the carbon dioxide is fixed in the above-mentioned manner. By this process, it is possible to avoid intrusion of nitrogen and/or oxygen having a high heat conductivity, which is problematic in the case of manufacturing the heat insulating foamed material in an atmosphere of air. Further, even when included, carbon dioxide does not decrease the heat insulating property of the obtained heat insulating foamed material because it is fixed on the wall surfaces of the closed cells.

Further, the heat insulating foamed material in accordance with the present invention desirably has such a constitution comprising a hard urethane foam, wherein the reactive blowing agent is fixed on the wall surfaces of the closed cells and forms a halogenated hydrocarbon chain in an end residue state or a branched chain state. In the heat insulating foamed material according to this constitution, the material becomes nonflammable because the constituent resin contains halogen. Further, by virtue of the fixation of halogen, any halide is not to be released in the air, and an influence on the environmental disruption such as depletion of ozone layer is reduced. Moreover, the safety at the time of manufacturing is improved because the blowing is performed with a nonflammable halide.

In the manufacturing method in accordance with the present invention, when a polyurethane material (precursor) including a polyol composition in which fine particles whose surfaces are modified to have an affinity for the volatile compound or the reactive blowing agent are present as a blowing core agent in a colloidal form is employed, it is possible to form closed cells having a uniform cell diameter because the blowing agent blows by utilizing the fine particles as a blowing core.

Further, it is possible to form the heat insulating foamed material having the closed cells whose cell diameter is more minimized, because the above-mentioned fine particles have an affinity for the blowing agent, and are uniformly and stably dispersed in the blowing agent. In the polyurethane foamed material having the closed cells whose cell diameter is more unified and minimized in such manner, the heat conduction through the solid part is suppressed by virtue of the increased number of the cells, and the heat insulating property of the polyurethane foamed material is improved correspondingly.

If the average particle diameter of the fine particles as a blowing core is 0.1 µm or smaller, the colloidal dispersion of the fine particles in the blowing agent is further stabilized, and if the unit weight number of the particles is increased, an effect of miniaturization of the closed cells is obtained.

A combination of an organic liquid, the volatile compound, selected from hydrocarbons with an alkyl group, and a combination of an organic liquid, the volatile compound, selected from the group consisting of fluorocarbons, hydrofluorocarbons and hydrochlorofluorocarbons with a fluoroalkyl group are effective for miniaturization of the closed cells, because these combinations reflect a particularly strong affinity and thus the dispersion stability of the fine particles in the blowing agent is improved.

Further, in case of dispersing metal fine particles or an inorganic fine particles in water as a blowing core, it is preferable to perform a surface modification in the following manner. Since the carboxylic group of a carboxylic acid is liable to be adsorbed on the metal fine particles or inorganic fine particles, the fine particles are first surface-modified with the carboxylic acid and then surface-modified with an alkylammonium salt, a sulfonic acid metal salt (a metal sulfonate) or a carboxylic acid metal salt (a metal carboxylate). By the above-mentioned treatment, an ionic property is given on the surfaces of the fine particles and the dispersion stability of the fine particles in water is improved. If such fine particles are employed as a blowing core, they are useful in miniaturization of the closed cells.

Moreover, if hollow fine particles whose wall material is made of an organic high polymer, their dispersion stability in the colloidal solution is improved and effective for miniaturization of the closed cells.

Next, an embodiment wherein the epoxide compound comprises fine particles whose surfaces are modified with a functional group containing epoxy group, and a water containing colloidal solution prepared by dispersing the fine particles in the polyol composition will be illustrated.

In this water containing colloidal solution, it is recommendable to coexist therein an organic liquid having a lower gas heat conductivity than that of carbon dioxide as a volatile compound. In this case, the closed cells are formed with the carbon dioxide generated by the water blowing and the above-mentioned organic liquid, and the epoxy group on the surfaces of the fine particles is allowed to react with the carbon dioxide to fix the latter. In this manner, the carbon dioxide having a high heat conductivity is removed from the closed cells and the vapor of the organic liquid having a low heat conductivity remains in the closed cells, thereby to produce the heat insulating foamed material excellent in the heat insulating performance.

Moreover, according to the above-mentioned manufacturing method employing the water containing colloidal solution, the fine particles having a carbon dioxide fixation ability have an affinity for the reactive blowing agent or the volatile compound and thus the closed cells are formed without separating the above-mentioned fine particles from the reactive blowing agent or the volatile compound in addition to the previously-mentioned effect of uniform miniaturization of the closed cells. For that reason, the above-mentioned fine particles are inclined or segregated toward the vicinity of the closed cells in a high concentration and an effect that the fixation of carbon dioxide after formation of the closed cells is increased. Further, since the surface area of the fine particles is large, this mode of operation is characterized by the high-speed carbon dioxide fixation.

In the following paragraphs, preferred embodiments of the heat insulating foamed materials and methods for manufacturing the same in accordance with the present invention will be described in more detail with reference to the attached drawings.

The heat insulating foamed materials in accordance with the present invention are constituted with resin foamed material having closed cells which are filled with a volatile compound having a boiling point of 150°C or lower and a molecular weight of 70 or larger, at a vapor pressure of 1 mmHg or above at 25°C. A reactive blowing agent itself and/or gases generated from the reactive blowing agent are fixed on the inner surfaces of the closed cells.

It is preferable in general that the vapor pressure of the volatile compound confined in the closed cells is 100 mmHg or lower at 25°C. As described previously, this constitution ensures a low vapor pressure of the volatile compound in the closed cells and thus remarkably contributes to substantial nonflammability or fire retardant property at the time of application and to a reduction in the load on the global environment.

As the volatile compound, which eventually serves as a cell filling gas, any compound having a boiling point of 150°C or lower and a molecular weight of 70 or larger may be used in constituting the heat insulating foamed material in accordance with the present invention, though the following compounds are preferably employed in general.

First, a cyclohydrocarbon is preferable for improving the heat insulating property. The cyclohydrocarbon may be exemplified as cyclopentene (molecular weight: 68.12), cyclopentane (molecular weight: 70.14), cyclohexane (molecular weight: 84.16), cyclohexene (molecular weight: 82.15), 1,4-cyclohexadiene (molecular weight: 80.13), 1,3-cyclohexadiene (molecular weight: 80.13), and quadricyclane (molecular weight: 92.14). Preferably employed aromatic compound may be exemplified as benzene (molecular weight: 78.11), toluene (molecular weight: 92.14), thiophene (molecular weight: 84.1), fluorobenzene (molecular weight: 96.1), chlorobenzene (molecular weight: 113.56), and the like. In order to be minimize the influence of any impurity such as air, a compound having from five to six carbon atoms and a saturation vapor pressure of about 100 mmHg or above at room temperature is best suited for the purpose.

From the viewpoint of heat conductivity, the suitable compound may further be exemplified as pyrimidine (molecular weight: 80.09), pyrazine (molecular weight: 80.09), pyridine (molecular weight: 79.10), tetrahydrofuran (molecular weight: 72.1), tetrahydropyran (molecular weight: 86.13), 1,3-dioxolan (molecular weight: 74.1), dioxane (molecular weight: 88.1), 1,4-dioxene (molecular weight: 86.1), trioxane (molecular weight: 90.07), thiazole (molecular weight: 85.12), 2-methoxy-1,3-dioxolan (molecular weight: 104.11), and the like.

From the viewpoint of reducing the heat conductivity, it is particularly preferable to employ a configuration wherein a fluorohydrocarbon selected from highly fluorinated or perfluorinated compounds of large molecular weight having from three to seven carbon atoms, fluoroethers having three to eight carbon atoms, fluorotertiaryamines having from three to six carbon atoms, and iodofluorocarbons having four or less carbon atoms, constitutes the gas filled in the closed cells.

As the fluorohydrocarbon selected from the highly fluorinated or perfluorinated compounds having from three to eleven carbon atoms, there are those in a straight chain state, branched chain state and cyclic chain state. Concrete examples are presented below: 1,1,1,4,4,4-hexafluorobutane (molecular weight: 166, boiling point: 24.6°C), 1,1,2,2,3-pentafluoropropane (molecular weight: 134, boiling point: 26°C), perfluorohexane (molecular weight: 338, boiling point: 60°C), perfluorocyclohexane (molecular weight: 300), perfluoroheptane (molecular weight: 370, boiling point: 80°C), perfluoro(methylcyclohexane) (molecular weight: 350, boiling point: 76°C), perfluoro(methylcyclopentane) (molecular weight: 300, boiling point: 60°C), perfluoropentane (molecular weight: 288, boiling point: 29.5°C), perfluorocyclopentane (molecular weight: 250), perfluoroisopentane (molecular weight: 288), perfluoro-3-methylbutane (molecular weight: 288), perfluoro-2,2-dimethylpropane (molecular weight: 288), perfluoroisohexane (molecular weight: 338), perfluoro-3-methylpentane (molecular weight: 338), perfluoro-2,2-dimethylbutane (molecular weight: 338), perfluoro-2,3-dimethylbutane (molecular weight: 338), perfluorodimethylcyclobutane (molecular weight: 300), and the like. Further, as a highly fluorinated hydrocarbon which is considered to have a short life in air and thus have only a small influence on the global concern on the global warming, there are highly fluorinated alkenes, and may be exemplified as perfluoro-2-methyl-2-pentene, perfluoro-4-methyl-2-pentene, perfluoro-2-pentene, (perfluorobutyl)ethylene, (perfluoroisopropyl)ethylene, hexafluoropropene, hexafluoro-1,3-butadiene, octafluoro-2-butene, octafluorocyclopentene, 3,3,4,4,4-pentafluorobutene-1, perfluoroheptene-1, perfluorooctene-1, 1H,1H,2H-perfluoro-1-octene, tetrafluoroethylene, and the like.

Moreover, as the highly fluorinated or perfluorinated fluoroethers having from three to eight carbons, there are those in a straight chain state, branched chain state and cyclic (annular) chain state. Concrete examples are shown below: 2,2,3,3,3-pentafluoropropylmethylether (molecular weight: 164, boiling point: 46°C), 2,2,3,3,3-pentafluoropropyl-1,1,2,2-tetrafluoroethylether (molecular weight: 250, boiling point: 58°C), 1,1,2,2-tetrafluoroethylmethylether (molecular weight: 132, boiling point: 38°C), 1,1,3,3,3-pentafluoro-2-trifluomethylpropylmethylether (molecular weight: 232, boiling point: 68 - 74°C), perfluorodiethylether (molecular weight: 254), perfluoro-2-butyltetrahydrofuran (molecular weight: 416, boiling point: 99 - 107°C), and the like.

Moreover, as the highly fluorinated or perfluorinated fluorotertiaryamines having from three to six carbon atoms, any of those in a straight chain state, branched chain state and cyclic chain state can be applied. For instance, perfluorotriethylamine (molecular weight: 371°C), perfluoropyridine (molecular weight: 169, boiling point: 89°C), and the like are preferably employed.

Further, iodofluorocarbons having four or less carbon atoms are also preferred as the volatile compound filled in the closed cells, because they have a particularly low heat conductivity in their gaseous state, and their life is shorter as compared with the other fluorides, and hence their influence on the global warming is small. Concrete compounds may be exemplified as heptafluoro-1-iodopropane, heptafluoro-2-iodopropane, nonafluoro-1-iodopropane, iodo-1,1,2,2-tetrafluoroethane, iodotrifluoromethane, 1,2-diiodotetrafluoroethane, 3-iodo-1,1,1-trifluoropropane, 2-iodo-1,1,1-trifluoroethane, and the like.

Moreover, fluorinated esters such as methyl trifluoroacetate, ethyl trifluoroacetate, and methyl pentafluoropropionate are favorably employed as the volatile compound filled in the closed cells of the heat insulating foamed material in accordance with the present invention, because they have a low heat conductivity in their gaseous state.

Except for those compounds containing iodine, the above-mentioned fluorides have a tendency of increasing the influence on the global warming, because their life is longer by one digit or more as compared with the corresponding hydrocarbons. However, by filling a small amount of fluorides in the closed cells in a state of reduced pressure as in the reactive blowing agent in accordance with the present invention, the amount of fluoride to be used can be reduced, and thus the influence on the global warming can be suppressed to a minimum.

Further, when these fluorides are employed as the closed cell-filling gas, any compounds including water, which will be described later, may of course be employed as the reactive blowing agent to be used in manufacturing the heat insulating foamed material.

Moreover, it is preferable that the vapor pressure of the compounds to be filled in the closed cells has a value of about 10 - 20 mmHg or above at 25°C in order to reduce the influence of any impurity having a high heat conductivity such as air. It is therefore required to select a compound having a boiling point of about 115°C or below.

As described previously, in view of reducing the inflammability or increasing fire retardant property, it is preferable to use water as the reactive blowing agent. In the case of employing water, carbon dioxide generated from water demonstrates a blowing activity, and forms a carbonate compound in a straight chain state or cyclic chain state which is eventually fixed on the inner walls of the closed cells after the blowing operation.

As stated previously, in view of improving the nonflammability at application, the desirable configuration is such that the heat insulating foamed material is a hard urethane foam, wherein the nonflammable reactive blowing agent is fixed on the inner walls of the closed cells, and forms a halogenated hydrocarbon chain in an end residue state or branched chain state.

In the following paragraphs, a preferred method for manufacturing the heat insulating foamed material in accordance with the present invention will be described.

First, a description will be made on a method wherein the reactive blowing agent is an organic halide and its fixation reaction is a reaction of forming a halogenated hydrocarbon chain in an end residue state or a branched chain state.

In this manufacturing mode, a polyol is first mixed with at least one volatile compound having a boiling point of 150°C or lower and a molecular weight of 70 or larger, and the reactive blowing agent, and then the mixture is combined with polyisocyanate to prepare a polyurethane material (precursor). The polyurethane material was injected into a container, thereby to form the hard polyurethane foam having closed cells by causing the above-mentioned reactive blowing agent to blow simultaneously with the formation of the polyurethane. Thereafter, by performing a fixation reaction of the reactive blowing agent thereby to fix the blowing agent on the inner walls of the closed cells and to allow the vapor of the volatile compound to remain in the closed cells. In the description of the present invention, the term polyisocyanate is used to designate also a mixture of isocyanate monomer or polymer precursor and polymer inclusively.

By performing the blowing operation with the reactive blowing agent, it becomes possible to broaden the range of selection of the compound which will eventually become the filling gas. That is, the volatile compound does not necessarily have a blowing activity in this case and only a small amount of the volatile compound is sufficient for the purpose. Further, a volatile compound of a high boiling point which has a poor blowing efficiency can also be employed. After the concurrent blowing and molding, the reactive blowing agent is fixed and the closed cells are filled with a small amount of vapor of the volatile compound having a low heat conductivity. It is therefore possible to manufacture a heat insulating foamed material having a slight inflammable property even if an inflammable volatile compound is employed.

In this manufacturing mode, it is preferable to employ at least one volatile compound having a boiling point of 115°C or lower in an amount ranging from 0.1 mole/kg to 0.4 mole/kg for the polyol. By virtue of this low boiling point of 115°C or lower and the amount of 0.1 mole/kg or more for polyol, the vapor pressure of the volatile compound in the closed cells reaches from 10 to 20 mmHg or more at 25°C, as a result of which a high heat insulating property is achieved. When an amount of less than 0.4 mole/kg for polyol is employed, the vapor pressure of the volatile compound in the closed cells becomes 100 mmHg or lower at 25°C and the inflammability of the obtained heat insulating foamed material can be reduced in a great deal even if an inflammable volatile compound is used.

Further, as one of the preferred reactive blowing agents employed in this manufacturing method, there is a nonflammable reactive blowing agent comprising a volatile halide. By fixing this volatile halide on the inner surfaces of the closed cells, a hard polyurethane foam provided with a halogenated hydrocarbon chain in an end residue state or a branched chain state can be produced. By virtue of the fixation of the halide, the inflammability of the heat insulating foamed material thus obtained is reduced as compared with the original hard urethane foam. In this case, the larger the number of the halogen atoms is and the smaller the number of carbon atoms is, the higher the effect of nonflammability is. Further, by performing the blowing operation with a nonflammable blowing agent, safety at the time of manufacturing is improved.

There is also a case wherein an alcohol or an amine is employed as the reactive blowing agent and is fixed by a direct reaction with the polyisocyanate. In this case, the reactive blowing agent is fixed on the walls of the closed cells through a urea bond, urethane bond, biuret bond or an allophanate bond. In the respective concrete cases, alcohol as the reactive blowing agent is fixed through the urethane bond (in the presence of an excessive amount of polyisocyanate, the agent is first fixed through the urethane bond and then through the allophanate bond), and the amine is fixed through the urea bond (in the presence of an excessive amount of polyisocyanate, the agent is first fixed through the urea bond and then through the biuret bond).

However, if the reaction with the polyisocyanate is utilized as the fixation reaction, since a polyurethane formation reaction (a reaction of polyol with polyisocyanate) is required to precede to the fixation reaction, it is desirable to employ alcohols which relatively slowly react with polyisocyanate.

In particular, a tertiary alcohol such as t-butanol is desirable because of its slow reaction velocity with the polyisocyanate. As the tertiary alcohol, a halide such as fluoroalkyl alcohol is preferable and the concrete compound may be exemplified as hexafluoro-2-methylisopropanol (boiling point: 60°C), perfluoro-t-butanol (boiling point: 44°C), and the like.

Further, as a reactive blowing agent which can be fixed in another reaction, a polymerizable monomer or polymer precursor having at least one carbon-carbon double bond may be employed. In this case, however, a polymerization catalyst or a polymerization initiator may frequently be required for the fixation. That is, the polymerizable monomer is at first gassed or vaporized to form the foamed material, and the closed cells are filled mainly with the gas of the polymerizable monomer. Thereafter, the gas of the polymerizable monomer polymerizes by means of the polymerization catalyst or the polymerization initiator, thereby to form a polymer on the inner walls of the closed cells and fixed thereon. As the polymerizable monomer which can be employed as the reactive blowing agent, it is preferable to be an addition polymerizable monomer selected from the group consisting of olefines, vinyls, vinylidenes and acryls.

As the polymerization catalyst or the polymerization initiator for the above-mentioned polymerizable monomer, it is possible to select from various catalysts, and employ a radical polymerization initiator such as peroxide, azo compound, for instance, azobisisobutyronitrile and the like, or an ionic polymerization initiator such as protonic acid, Lewis acid, organometalic compound, for instance, Ziegler-Natta catalyst, and the like.

In the above-mentioned manufacturing mode, it is possible to employ the reactive blowing agent by encapsulating it in a microcapsule composed of a wall material of thermoplastic resin. That is, this method proceeds as follows: first, the microcapsules composed of cores made of the reactive blowing agent and wall materials made of the thermoplastic resin are dispersed in a mixture of the above-mentioned volatile compound and polyol, the dispersion is mixed with the polyisocyanate, and then the mixture is injected into a container, thereby to vaporize the above-mentioned reactive blowing agent by a heat generated by the reaction of the polyol with the polyisocyanate, and then to expand the above-mentioned microcapsules to rupture their wall material to form an urethane resin foamed material. Thereafter the gassed or vaporized reactive blowing agent in the closed cells is reacted with the material on the wall surfaces of the above-mentioned foams, thereby to reduce the pressure inside the closed cells.

At that time, the microcapsules expand to rupture their walls, but the independency of the closed cells is kept high, because a hard polyurethane foam containing the discrete closed cells is produced as a whole by the present method. In this method of employing the microcapsules, it is possible to fix the blowing agent by its reaction with the polyisocyanate, after formation of the foamed material by the vaporization of the volatile compound. This mode is preferable because formation of the polyurethane resin proceeds independent from the pressure reduction process.

Further, in view of the nonflammability, a reactive blowing agent composed of volatile halide is also desirable in this manufacturing mode, as in the previously mentioned manufacturing mode. The volatile halide is fixed on the inner surfaces of the closed cells as a halogenated hydrocarbon chain in an end residue state or branched chain state, thereby to form a nonflammable hard polyurethane foam.

As the reactive blowing agent to be used in this manufacturing method by means of microcapsulation, it is possible to employ any of the compounds used in the previously-described manufacturing method using the alcohols or amines as the reactive blowing agent. In this manufacturing method employing the microcapsules however, it is possible to proceed the formation of polyurethane and the pressure-reduction accompanied by the fixation of the blowing agent separately. For that reason, of these reactive blowing agents which are eventually fixed by the reaction with polyisocyanate, a primary alcohol and a secondary alcohol, which rapidly react with the polyisocyanate, are easy to use, and the compounds such as a primary amine and a secondary amine are also easy to use. As the amines, any amines can be used as far as they are easily vaporized by a heat generated by the polyurethane resin formation reaction.

The thermally-expandable microcapsule to be employed in this manufacturing method may be prepared mainly by means of in situ method in a manner as disclosed in "Kohbunshi" Vol. 40(4), pp. 248 - 251, 1991.

As the thermoplastic resin to be used as the wall material of the microcapsule, it is preferable to use a copolymer comprising mainly of one member selected from the group consisting of vinylidene chloride, acrylonitrile, an ester of acrylic acid and an ester of methacrylic acid, and desirable is a copolymer having an excellent moldability including a good thermally-expandable property. More preferable is the one that can be cross-linked by a hardening agent, thereby to improve its hardness and thermal deformability after expanded by the heat.

Moreover, in the above-mentioned manufacturing method, it is possible to adjust the diameter of the bubbles by controlling the pressure inside the container, wherein the molding and blowing are performed, by means of a vacuum pump. In the case of the concurrent molding and blowing under an atmospheric or normal pressure, the timing between the formation of polyurethane and the blowing is determined in compliance with the boiling point of the blowing agent. If the boiling point of the blowing agent is low and the blowing is too rapid, the size of the closed cells becomes undesirably large because of the too much softness of the resin. In contrast, if the boiling point is excessively high, a sufficient volumetric increase of the resin cannot be obtained because the heat required for the blowing cannot sufficiently be obtained by the polyurethane formation reaction, or, even if some heat can be obtained, the blowing is undesirably retarded. Therefore, in the case of the concurrent molding and blowing under an atmospheric pressure, only such blowing agents that have a boiling point of from room temperature to about 50°C can be used.

In contrast to this, the manufacturing method in accordance with the present invention can adjust the timing of the blowing process by controlling the degree of pressure-reduction inside the container wherein blowing/molding process is performed. Thus, it is possible to adequately determine the timing of the polyurethane formation reaction and the blowing process and to realize a desirable size of the closed cells, thereby to facilitate the manufacturing of the heat insulating foamed material having an excellent heat insulating property. Further, the use of the volatile compounds having a high boiling point and a low heat conductivity is possible, thereby to make it easy to manufacture the excellent heat insulating foamed material. The preferable timing of the blowing process is experimentally determined, that is, by varying the time point of initiating the pressure-reduction by means of a vacuum pump and the speed in the pressure-reduction to compare them with the diameter of the obtained closed cells. And, if the diameter of the closed cells is too small, the time point of initiating the pressure-reduction is hastened and the speed is increased. If too large, the time point of initiating the pressure-reduction is delayed and the speed is decreased.

Further, since only a small amount of the reactive blowing agent is sufficient in this blowing process under a reduced pressure, as compared with that under an atmospheric or normal pressure and the time period required for fixing the reactive blowing agent can be made short. Therefore, the safety at the manufacturing process can be improved even when the reactive blowing agent is inflammable because only a small amount of the reactive blowing agent is required.

Moreover, from the viewpoint of obtaining a foamed material having a high heat insulating property, it is desirable to previously remove any impurity such as air. In particular, when the vapor pressure of the volatile compound confined in the closed cells is low, the influence of the above-mentioned impurity is large, and thus the following process of removing the impurity becomes more important. Removal of the impurity such as air may be possible by reducing the pressure by means of a vacuum pump or the like. However, in order to remove the impurity more completely, it is recommendable to bubble the inside of the container and to substitute atmosphere surrounding the polyurethane raw material with a particular gas, or to repeat the bubbling and the pressure-reduction by means of a vacuum pump.

As the particular gas, it is preferable to employ a gas having a nonflammability in view of the safety and low heat conductivity so as not to increase the heat conductivity inside the closed cells even if it remains in a minute amount in the closed cells. As such gases, although krypton, xenon, and the like are suitable, it is also possible to use a highly fluorinated hydrocarbon having a boiling point of from -30°C to 20°C. The highly fluorinated hydrocarbon is a hydrocarbon most of whose hydrogen atoms are substituted by fluorine atoms and which is easy to recover by cooling or compressing because of low boiling point. A highly fluorinated hydrocarbon further containing iodine atom, for instance, trifluoromethyl iodide or the like is particularly preferred because it has a fire-extinguishing property.

Next, a description will be made on a manufacturing method, wherein the reactive blowing agent is carbon dioxide and its fixation reaction is a reaction of forming an organic carbonate compound with an epoxide compound in the presence of a catalyst.

In this manufacturing method, a polyol, a volatile compound having a heat conductivity lower than carbon dioxide, water as a blowing agent, an epoxide compound for fixing the carbon dioxide, and a carbon dioxide fixation catalyst are mixed together. The mixture is further mixed with polyisocyante to prepare a polyurethane material. This polyurethane material is then injected into a container to simultaneously proceed a polyurethane formation reaction and a generation of carbon dioxide, thereby causing a blowing to form a hard polyurethane foam containing urea bonds and having closed cells. Thereafter, the carbon dioxide is fixed by the epoxide compound, as a result of which a small amount of vapor of the volatile compound remains inside the above-mentioned closed cells.

For the reason similar to that of the previously-mentioned manufacturing method, it is possible to obtain a foamed material having a high heat insulating property and a low inflammability by the use of this method. Further, it is possible to improve the safety at the manufacturing step by virtue of the use of nonflammable water.

Further, for the reasons similar to those in the previously-mentioned manufacturing method, it is preferable to use at least one volatile compound having a boiling point of 115°C or lower in an amount of from 0.1 mole/kg to 0.4 mole/kg for the polyol in view of maintaining the heat insulating property and further reducing the inflammability.

The carbon dioxide which has first acted as a blowing agent is then reacted with the epoxide compound by an action of the carbon dioxide fixation catalyst employed in the present invention, and turns into a polycarbonate or a cyclic carbonate to be fixed. As the epoxide compound, various glycidyl ethers, triethylene oxides, propylene oxides and the like, are employed. In particular, there are exemplified as glycidol, phenylglycidyl ether, butylglycidyl ether, 2-ethylhexylglycidyl ether, 2-methyloctylglycidyl ether, glycerol diglycidyl ether, glycerol triglycidyl ether, trimethylolpropane polyglycidyl ether, neopentylglycol diglycidyl ether, ethylene glycol diglycidyl ether, and the like.

At that time, if the carbon dioxide fixation catalyst of a metal halide such as zinc chloride, zinc iodide, aluminum chloride, cobalt chloride or the like, carried on a carrier of magnesium hydroxide, γ-alumina, or the like is employed, the polycarbonate is produced. If a combination of a metal halide such as zinc chloride, zinc bromide, zinc iodide or the like with an onium salt such as ammonium salt, phosphonium salt, sulfonium salt, oxonium salt, arsonium salt, stibonium salt, selenonium salt, iodonium salt, stannonium salt or the like is employed, the cyclic carbonate is produced. Of the onium salts, it is preferable to use onium halide, and, inter alia, ammonium halides such as tetrabutylammonium bromide, tetrabutylammonium iodide or the like, or sulfonium halide are particularly preferred. In addition to these, an alkali metal halide such as lithium chloride, lithium bromide, sodium iodide, lithium iodide or the like, and the above-mentioned onium salt, either alone or in combination, are also available for the production of the cyclic carbonate. Further, in case of producing the cyclic carbonate, if an epoxide compound having a low boiling point such as propylene carbonate or the like is employed, the carbon dioxide is fixed as a cyclic carbonate in a liquid state. From the viewpoints of the strength of the resin and the improvement in the heat insulating property, it is preferable to employ an epoxide compound having a high boiling point to fix the carbon dioxide for producing the cyclic carbonate in a solid state. Further, the addition reaction catalyst may be included in either of the polyol composition or the isocyanate.

In this manufacturing method employing carbon dioxide as the blowing agent, it is preferable to perform the blowing process under a reduced pressure as in the previously-mentioned manufacturing method employing organic halide as the blowing agent. In this case, the closed cell formation under a reduced pressure can be carried out in a closable container while controlling the size of the closed cells in a similar manner to that in the previously-mentioned manufacturing method, by employing only water as the reactive blowing agent by 0.35 wt% - 1.4 wt% for the polyol so as to release carbon dioxide corresponding to 50 - 200 mmHg at 25°C, and by adjusting the pressure inside the container by means of a vacuum pump. In this manufacturing method, normally a large quantity of the epoxide compound and water are employed if a volatile compound having a small vapor pressure is used, but if this blowing process under a reduced pressure is employed, the required epoxide compound is made small in amount and the time required for the fixation of the carbon dioxide can be shortened. Further, by avoiding the excessive increase in the amount of water, the temperature at the blowing does not rise too high. For that reason, a mutual communication between the respective cells can effectively be prevented and thus a foamed material having favorable closed cells can be obtained.

In this manufacturing method, from the viewpoint of improving the heat insulating property, it is preferable to form the heat insulating foamed material by performing the blowing process, after degassing the air dissolved in the material, and/or under a mixed gas atmosphere of at least one of carbon dioxide, krypton or xenon as in the previously-mentioned manufacturing method. By performing the process in this manner, it is possible to avoid an undesirable intrusion of oxygen or nitrogen having a high heat conductivity which is liable to occur in case of performing the blowing and molding in the presence of air or nitrogen.

In case that a slight amount of water contained in the polyol as an impurity is reacted with polyisocyanate to yield carbon dioxide, or in case of generating carbon dioxide as a by-product of the urethane reaction, the process of the present invention can fix these in a solid state. Thus, the present invention is advantageous in producing a heat insulating foamed material having a high heat insulating property. Therefore, even in the case of the previously-mentioned manufacturing method, wherein water is not added as the reactive blowing agent, the high heat insulating property of the obtained foamed material can be maintained by suppressing the accumulation of the carbon dioxide, which may be generated in the previously-mentioned manner, by an addition of an epoxide compound to the polyurethane material.

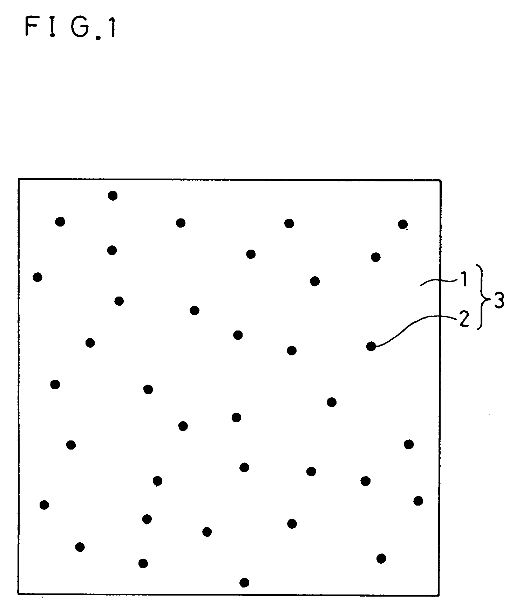

Further, in an embodiment of the polyol composition containing the above-mentioned fine particles employed in the manufacturing method in accordance with the present invention, the fine particles 2 are dispersed in a colloidal form in the polyol 1 which dissolves the reactive blowing agent and the volatile compound as exemplarily shown by FIG.1.

Moreover, even in case of employing only water as the reactive blowing agent and no volatile compound, a blowing agent can be formulated as an aqueous colloidal solution constituted solely with water.

Next, the fine particles employed in the present invention as a blowing core agent will be illustrated. As the fine particle, any of metal fine particles, inorganic fine particles and organic fine particles may be used in the present invention. They may be exemplified as the metal fine particles of gold, iron, lead and the like, and the inorganic fine particles such as spinel, mullite, cordierite, alumina, talc, aluminum titanate, silica, zirconia, barium silicate, titanium oxide, iron oxide, tungsten oxide, indium oxide, and the like. As the organic fine particles, there may be exemplified as pigments such as carbon black, phthalocyanine and the like, high polymer fine particles such as acrylic resin, styrene resin, and the like, and hollow fine particles whose walls are made of organic high polymer, and the like. When these fine particles are added to the polyol at about 10⁵ pieces for 1 g of the polyol, the effect of the present invention is realized.

The surface modifying group may be exemplified as an alkyl group, an aromatic alkyl group, a halogenated alkyl group, in the case of employing a hydrophobic volatile compound or reactive blowing agent. On the other hand, in the case of employing a hydrophilic volatile compound or reactive blowing agent, they may be exemplified as an alkali metal salt of carboxylic acid, an alkali metal salt of sulfonic acid, an alkali metal salt of phosphonic acid, a quaternary ammonium salt, a quaternary phosphonium salt, a quarternary sulfonium salt, a hydroxyl group, an amino group and the like. In practice, a combination of the volatile compound, reactive blowing agent and the surface modifying group should be selected by deliberately considering the balance between the hydrophobic property and hydrophilic property of the respective members and the affinity between the respective atoms.

The fine particles employed in the present invention are those having modified surfaces which show an affinity for the volatile compound and the reactive blowing agent. Those fine particles whose surfaces show an inherent affinity for the volatile compound and the reactive blowing agent are applicable to the process of the present invention without subjecting them to the surface modification. Such fine particles may be exemplified as the styrene fine particles for the hydrocarbon, a volatile compound, the metal fine particles and the inorganic fine particles for water, a reactive blowing agent.

Although not limited, the general methods for modifying the surface include a surface modification with a surfactant and a surface modification by a microencapsulation, a surface modification by a chemical reaction and the like.

As the surface modification by means of the surfactant, for instance, in case of hydrophobic modification of the surfaces of the metal fine particles and inorganic fine particles, the surfaces of the fine particles can be made hydrophobic by treating the metal fine particles and inorganic fine particles in water with a water-soluble surfactant, and then adding a water-soluble calcium salt or barium salt to the treating solution to precipitate the surfactant as a calcium salt or a barium salt which is then filtered off, followed by a drying. In case of dispersing the metal fine particles and the inorganic fine particles in water, the surfaces of the fine particles are first modified with a carboxylic acid such as stearic acid and the like by utilizing the fine particles as the cores, followed by further modification of the once modified surfaces with an alkali metal salt of sulfonic acid such as sodium octadecylsulfonate and the like, or an alkyl ammonium salt or an alkali metal salt of carboxylic acid.

As the method in accordance with the surface modification by microencapsulation, there are a spray drying method, a simple coacervation method, an interface reaction method and the like. For instance, the spray drying method performs the surface modification in a mode of dispersing the fine particles in a solution which dissolves the surface modifier and then drying or coagulating the dispersed solution in an instant.

On the other hand, a topochemical method is a method of introducing the surface modification group into the fine particles through covalent bonds by allowing a chemical reaction to occur on the surfaces of the fine particles. Various reactions may be utilized in this case, for instance, a coupling reaction of silane or the like for the surfaces of the fine particles having a hydroxyl group or a carboxyl group, and an esterification reaction with an alcohol.

In manufacturing the foamed material of the present invention utilizing the fine particles, first a colloidal solution is prepared by dispersing the fine particles having the surface modification groups with an affinity for the blowing agent, and then the colloidal solution is mixed with the polyol to disperse it in the polyol. According to this method, it is possible to prepare the polyol composition with ease without damaging or deteriorating the dispersion of the fine particles.

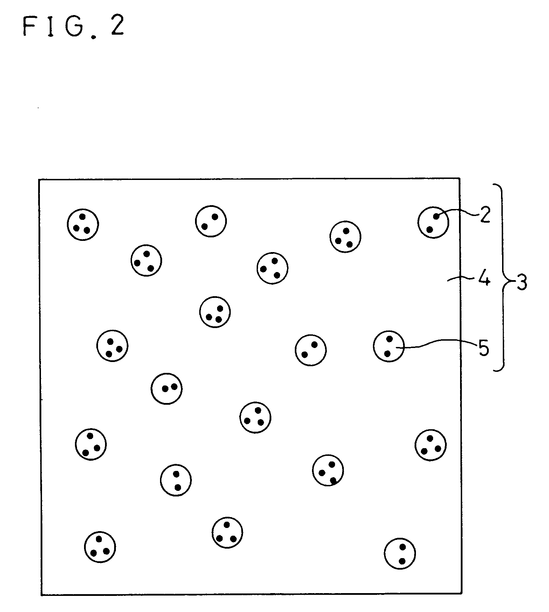

In the polyol composition 3, although the blowing agent may be dissolved in the polyol as shown by FIG.1, it is possible to ensure a favorable foamed state even in the case wherein the blowing agent is half-dissolved in the polyol, or in the case wherein the blowing agent 5 is not dissolved but dispersed in an emulsion state as shown by FIG.2, because the fine particles 2 in the blowing agent function as the blowing cores. In particular, in the case wherein the blowing agent is dispersed in the polyol composition in the emulsion state, an effect of unifying the cell diameter is remarkable. In a case wherein the fine particles are not dispersed in the blowing agent, closed cells having inhomogeneous diameter are liable to be formed.

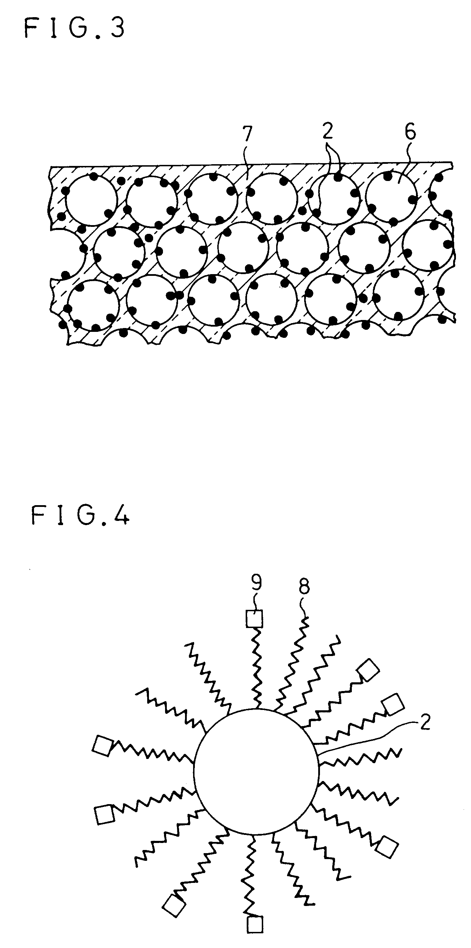

FIG.3 is a schematic view of a urethane foam material containing urethane resin 7 and the fine particles 2.

If a method, whereby the fine particles whose surfaces are modified by epoxy group having a carbon dioxide fixation ability are dispersed in the polyol in a colloidal form, is employed, the carbon dioxide inside the closed cells generated during the blowing step reacts with the above-mentioned fine particles to form an organic carbonate compound to be fixed there. Since the fine particles 2 which react with the carbon dioxide have an affinity for the blowing agent, the fine particles are inclined or segregated toward the vicinity of the closed cells 6 as shown by FIG.3, after being blown, and thus the fixation of the carbon dioxide is performed effectively.

FIG.4 is a schematic view showing an example of the fine particles whose surfaces are modified with the carbon dioxide reactive groups, wherein the surfaces of the fine particles 2 are modified with the surface modifying groups 8 which have an affinity for the blowing agent and the carbon dioxide reactive groups 9 having epoxide moieties. The epoxide moieties become liable to react with the carbon dioxide when they are situated at the ends of the surface modifying groups, though the intended reaction with the carbon dioxide will proceed even if they have been introduced into a mid portion of the surface modifying groups. Further, an epoxy group is the surface modifying group having a relative affinity for both of water and organic liquid. A carbon dioxide fixation catalyst is required for the fixation of the carbon dioxide, and thus the previously-described carbon dioxide fixation catalyst is employed.

In the polyurethane foamed material in accordance with the present invention, although a reduced pressure state is yielded in the spaces inside the closed cells by fixing the carbon dioxide after the reaction and the pressure-reduction, the heat insulating performance of the polyurethane foamed material is apt to be deteriorated by any gas released from the polyurethane foamed material as time passes. It is therefore desirable to add some material which can absorb the above-mentioned released gas in the composition. As the absorbing material, active charcoal, zeolite, silica gel and the like are employed, and a material which suitably corresponds to the species of the gas released from the polyurethane foamed material is selected.

Further, since the present invention expects a pressure-reducing action by the fixation reaction of the reactive blowing agent after the foamed resin material having the closed cells forms a cellular structure inside the container, heat insulating materials having a variety of shapes can easily be obtained. It is therefore possible to form the heat insulating foamed material of the pressure-reduced state by a direct blowing and molding in a closable rigid container containing a metal layer having an adequate shape.

In particular, if the rigid container containing the metal layer is configured with a closable housing for a refrigerator having an injection inlet, by combining an outer housing made of a metal and an inner housing made of a hard resin, the heat insulating foamed material in the pressure-reduced state can easily be obtained in accordance with the present invention, and can suitably be employed as a heat insulating housing for the electric refrigerator.

Moreover, as the above-mentioned polyol and polyisocyanate, any materials that are generally employed in the hard polyurethane foamed material can be employed. In the present invention, it is preferable to select a suitable material such as polyol and polyisocyanate that are capable of forming a hard and hardly deformable polyurethane resin, because the pressure inside the closed cells is reduced after the concurrent blowing and molding process.

As regards the polyols, it is suitable for ensuring the hardness or controlling the reactivity to employ a polyol which is synthesized from polyhydric alcohols and has a multiplicity of hydroxyl groups in its molecule, in addition to the conventionally-employed polyether polyols and polyester polyols. Further, in the case of blowing in a reduced pressure state, it is preferable to employ a polyol having a low viscosity because the amount of the employed blowing agent is small.

The polyisocyanates which are suitably employed in the present invention can be exemplified as diphenylmethane diisocyanates, tolylene diisocyanates, xylylene diisocyanates, metaxylylene diisocyanates, hexamethylene diisocyanates, lysine diisocyanates, isophorone diisocyanates, trimethylhexamethylene diisocyanates, dimer acid diisocyanates, and the like. Inter alia, these polyisocyanates which are provided with nonflammability are most suited for the purpose.

The urethane reaction catalyst employed in the present invention is required to be selected from a gelling catalyst, a blowing catalyst, a retarding catalyst or the like, which is considered to be the most effective based on the reactivity of the urethane material. Generally employed catalyst is a tertiary amine or an organometallic compound. The amine catalysts may be exemplified as monoamines, diamines, triamines, cyclic amines, alcohol amines, ether amines, and the like. The most frequently employed organometallic compound is organic tin compounds.

In the present invention, catalysts for general prescription are utilized. It is however required to select the catalysts and/or to mix various catalysts in compliance with the boiling points of the various precursors. In addition to these, in order not to contribute to the vapor pressure inside the closed cells of the obtained heat insulating material, it is desirable to select one having a boiling point of 180°C or higher so that the vapor pressure may become 0.1 mmHg or lower at 25°C.

Moreover, such other additives as an oxidation inhibitor, a flame-resistant or nonflammable property improver, and the like may also be added to the composition.

In the following working examples and comparative examples, employed are KAOLIZER No.1 as the catalyst A, available from KAOH Co., Ltd, Japan, F-373 as the foam stabilizer, available from SHIN'ETSU Chemical Co., Ltd., Japan, an aromatic amine polyether polyol having a hydroxyl group value of 500 mgKOH/g as the polyol A, and a polyisocyanate having an amine equivalent of 170 as the polyisocyanate A, respectively.

### Example 1

In this example, a tertiary alcohol and cyclohexane (molecular weight: 84.16, boiling point: 80.7°C) were employed as the reactive blowing agent and the volatile compound having a molecular weight of 70 or larger and a boiling point of 150°C or lower, respectively.

The ratio by weight of the employed materials was such that the polyol A/the foam stabilizer A/the catalyst A/the reactive blowing agent A/cyclohexane/polyisocyanate A = 100/3/2/65/3/180. As the reactive blowing agent A, perfluoro-t-butanol (molecular weight: 236.5, boiling point: 44°C) which is a nonflammable reactive blowing agent was used. The amount of the employed cyclohexane corresponded to 0.36 mol. for 1 kg of the polyol A.

First, the polyol A, the catalyst A, the foam stabilizer A and cyclohexane were mixed together, and the polyisocyanate A was further added to this mixture to prepare a resin material (precursor). The resin material was then injected into a closable container composed of an outer housing made of a metal and an inner housing made of a resin to cause the blowing agent to blow, thereby to obtain a hard polyurethane foam.

The obtained foam was crushed to release cyclohexane which had been confined in the closed cells of the foam, and the amount of the cyclohexane was quantitatively determined by gas chromatography. From a calculation based on the amount of cyclohexane and the total volume of the closed cells obtained from the densities of the foam and the resin, it was revealed that the vapor pressure of the cyclohexane in the closed cells was 50 mmHg at 25°C. And, the density of the foam calculated was 0.037 g/cm³. The liquefied cyclohexane was isolated by heating the foam to 90°C and by reducing its pressure by a vacuum pump, and the amount calculated was 2 g or less for 100 g of the foam.

### Comparative Example 1

A concurrent blowing and molding under atmospheric pressure was performed in compliance with a prescription of material represented by the ratio by weight: the polyol A/the foam stabilizer A/the catalyst A/a blowing agent/polyisocyanate A = 100/3/2/35/135. In this case, cyclohexane was used as the blowing agent. The obtained foam had a high density of 0.055 g/cm³, because of the high boiling point of the used cyclohexane and of the resultant poor blowing efficiency. From a calculation of the vapor pressure of cyclohexane in the closed cells performed in a manner similar to that in Example 1, it was found to be 65 mmHg at 25°C. Most of the used cyclohexane was however liquefied and 25 g or more cyclohexane was isolated for 100 g of the foam by the same heating under reduced pressure as in Example 1.

### Comparative Example 2

Another concurrent blowing and molding under atmospheric pressure was performed in compliance with a prescription of material represented by the ratio by weight: the polyol A/the foam stabilizer A/the catalyst A/a blowing agent/water/polyisocyanate = 100/3/2/20/3/150. In this case, cyclohexane was used as the blowing agent. The obtained polyurethane foam had a density of 0.039 g/cm³ which was low as compared with that of Comparative Example 1, because of increased blowing efficiency obtained by the addition of water. From a calculation of the vapor pressure of the volatile compound in the closed cells performed in a manner similar to that in Example 1, it was found to be 60 mmHg at 25°C. Most of the used cyclohexane, the volatile compound, was however liquefied and 10 g or more cyclohexane was isolated for 100 g of the foam by heating while aspirating.

### Evaluation

A comparison was made on the heat insulating performances of the respective polyurethane foams obtained in Example 1 and Comparative Examples 1 and 2. The comparison test was performed in such a mode that the heat conductivity of the respective foams was calculated by measuring the difference in temperature between the top surface and the bottom surface of the test foams each having a thickness of 5 cm, mounted on a hot plate heated to 50°C placed indoors at 25°C. Comparison of the heat conductivities obtained from the measurement of the temperature differences disclosed that the foam of Example 1 substantially reached a constant heat insulating performance 3 days after the manufacturing. The heat insulating property in Example 1 was more excellent than in Comparative Example 1 by 12% and than in Comparative Example 2 by 4%. Further, from the result of a test on the nonflammability, it was found that the foam of Example 1 demonstrated a more favorable nonflammability or flame-resistant property than those of Comparative Examples 1 and 2.

It is believed that the improvement in the heat insulating performance of the foam produced in accordance with Example 1 is attributable to the following reasons. In Example 1, liquefaction of the employed cyclohexane hardly occurred because the amount employed was small and the blowing efficiency was favorably maintained by the employment of the reactive blowing agent A in the blowing process. In contrast to this, the liquefaction of the employed cyclohexane and a swelling of the resin occurred in Comparative Examples 1 and 2. In addition to these, the density of the foam was raised because of a poor blowing efficiency. The heat conductivity of the resin was also raised in Comparative Example 1. In Comparative Example 2, the amount of the carbon dioxide confined in the closed cells increased by the addition of water and the heat conductivity was also raised. From the analyses on the respective manufactured foams, it was found that a large amount of inflammable cyclohexane remained in the foams of Comparative Examples 1 and 2. In contrast to this, the foam of Example 1 had fluorine atoms on the surfaces of the closed cells and only a small amount of cyclohexane remained in the foam.

### Example 2

In this example, a heat insulating foamed material was formed by blowing under reduced pressure, by employing a tertiary alcohol and cyclopentane (molecular weight: 70.13, boiling point: 49.3°C) as the reactive blowing agent, and the volatile compound having a molecular weight of 70 or larger and a boiling point of 150°C or lower, respectively.

The ratio by weight of the employed materials was such that the polyol A/the foam stabilizer A/the catalyst A/the reactive blowing agent A/cyclopentane/polyisocyanate A = 100/3/2/23.6/0.9/145. The amount of the employed reactive blowing agent A corresponded to 1.0 mole for 1kg of the polyol, and the amount of the employed cyclopentane corresponded to 0.13 mole for 1 kg of the polyol.

First, the polyol A, the catalyst A, and foam stabilizer A were mixed together, and the polyisocyanate A was further added to the mixture to prepare a resin raw material mixture. The resultant mixture of the materials was injected into a closable container composed of an outer housing made of a metal and an inner housing made of a resin through an injection inlet provided on the housing. After the injection, the injection inlet was closed, and the container was evacuated in conformity with the progress of the polyurethane formation reaction while controlling the timing of formation of the polyurethane and blowing via a valve provided on an exhaust outlet of the container. The blowing was initiated under a pressure of 250mmHg or lower and completed at a pressure of 1 mmHg or lower. After the completion of the concurrent blowing and molding, the container was stood still for 1 day while the pressure inside the container was kept in a reduced state.

The vapor pressure of the volatile compound remaining inside the closed cells of the obtained polyurethane foam was 50 mmHg at 25°C, when calculated in a manner similar to that in Example 1. Further, the average cell diameter of the closed cells was about 110 µm.

From the investigation on the heat insulating performance of the obtained foam performed in a manner similar to that in Example 1, it was found that it demonstrated a favorable heat insulating performance similar to that in Example 1, and that the time required for reaching this heat insulating performance was only one day after the manufacturing, that was shorter than three days required in Example 1. And, the foam demonstrated a favorable nonflammability similar to Example 1, because only a small amount of nonflammable reactive blowing agent was required in this Example.

### Example 3

In this example, a blowing was performed under reduced pressure, by employing a tertiary alcohol and cyclopentane as the reactive blowing agent, and the volatile compound having a molecular weight of 70 or larger and a boiling point of 150°C or lower, respectively. In this case, however, the precursor for the polyurethane and the gas inside the container wherein the blowing was performed were first substituted with a nonflammable gas having a large molecular weight, and then the concurrent molding and blowing were performed. The ratio by weight of the employed materials was the same as in Example 2.

First, each of a mixture of the polyol A with the catalyst A, the foam stabilizer A, the reactive blowing agent A and cyclopentane, and polyisocyanate was separately subjected to a pressure-reducing step by means of a vacuum pump. Thereafter, any impurity gas such as air or the like dissolved in the polyurethane material was removed by substituting the gas with trifluoromethyl iodide (boiling point: -22.5, molecular weight: 195.91), by bubbling with the trifluoromethyl iodide. Further, the air confined in the container wherein the blowing was performed was also substituted with trifluoromethyl iodide in a similar manner. The concurrent blowing and molding was performed in an atmosphere of trifluoromethyl iodide in a similar manner to that in Example 2.

The vapor pressure of cyclopentane, the volatile compound, remaining inside the closed cells of the obtained polyurethane foam was 60 mmHg at 25°C, when calculated in a manner similar to that in Example 1. The average cell diameter of the closed cells was about 120 µm.

In a manner similar to that in Example 1, the nonflammability and the heat insulating performance of the obtained foam were measured. As a result, it was found that it demonstrated a particularly favorable nonflammability, and its heat insulating property was improved by 4% as compared with that of Example 2. Further, a sum of partial pressures of nitrogen and oxygen which had been confined in the foam of this example was also quantitatively determined by gas chromatography to reveal that it was 0.5 mmHg or lower at 25°C for this example, compared with 11 mmHg for Example 2.

From the analysis on the obtained foam, trifluoromethyl iodide, which has a fire-extinguishing action, was found to be included therein. It is therefore believed that the obtained improvement in the nonflammability is attributable to the trifluoromethyl iodide. It is also believed that the inclusion of nitrogen and oxygen, which have a high heat conductivity, was effectively suppressed, and thus the high heat insulating property was maintained in this example.

### Example 4

In this example, a tertiary alcohol and quadricyclane (molecular weight: 92.14, boiling point: 108°C), a multicyclic hydrocarbon, were employed as the reactive blowing agent and the volatile compound which eventually became a filling gas, respectively. In this case, the precursor for the polyurethane and the gas inside the container wherein the blowing was performed were first substituted with a nonflammable gas having a large molecular weight, and then the concurrent molding and blowing was performed under reduced pressure.

The ratio by weight of the employed materials was such that the polyol A/the foam stabilizer A/ the catalyst A/reactive blowing agent B/quadricyclane/polyisocyanate = 100/3/2/3/2.7/145. The amount of t-butanol (molecular weight: 74.12, boiling point: 83°C) employed as the reactive blowing agent B corresponded to 0.4 mole for 1 kg of the polyol, and the amount of the employed quadricyclane corresponded to 0.29 mole for 1 kg of the polyol.

Next, the air confined in the container wherein the blowing was performed and any gas dissolved in the polyurethane material were substituted with xenon in a manner similar to that of Example 3, and the concurrent blowing and molding was performed under reduced pressure.

The pressure inside the closed cells of the obtained polyurethane foam was 40 mmHg at 25°C when calculated in a manner similar to that in Example 1. Further, the average cell diameter of the closed cells was about 80 µm.

The nonflammability and the heat insulating property of the obtained foam were measured in a manner similar to that in Example 1. As a result, it was found that it demonstrated a favorable nonflammability as compared with that of Comparative Example 2, and its heat insulating property was more excellent by 2% as compared with that of Example 3, because of the smaller heat conductivity of the gas remaining inside the closed cells.

### Example 5

In this example, amine fluoride was employed as the reactive blowing agent C and microcapsules prepared by utilizing the amine fluoride as their cores. In this case, the precursor for the polyurethane and the gas confined inside the container wherein the blowing was performed were first substituted with a nonflammable gas having a large molecular weight, and then the concurrent molding and blowing was performed, respectively.

The employed microcapsules were those configured by utilizing 1H,1H-heptafuluorobutylamine (molecular weight: 197.1, boiling point:68°C), the reactive blowing agent, as their cores and a copolymer of polyvinylidene chloride (softening point: 110°C) as their wall materials. Further, the air confined in the container wherein the blowing was performed and any gas dissolved in the polyurethane material were substituted with xenon in a manner similar to that in Example 4, and the concurrent molding and blowing was performed under reduced pressure.

The ratio by weight of the employed materials was such that the polyol A/the foam stabilizer A/ the catalyst A/the reactive blowing agent C/quadricyclane/polyisocyanate

A = 100/3/2/3/1.8/145. The amount of the reactive blowing agent C corresponded to 0.15 mole for 1 kg of the polyol, and the amount of the employed quadricyclane corresponded to 0.20 mole for 1 kg of the polyol.

A mixture of the polyol A with the microcapsules, the foam stabilizer A, the catalyst A and quadricyclane was further mixed with polyisocyanate, and the resultant mixture was injected into a container. A polyurethane foam was molded in the container by softening the microcapsules with heat generated by the reaction, vaporizing the reactive blowing agent C, and blowing the microcapsules so as to rupture their walls. After the container was sealed, the reactive blowing agent C in the closed cells was reacted with the remaining polyisocyanate to be solidified. By this solidification, the pressure in the spaces inside the closed cells was reduced to form the heat insulating foam.

The pressure inside the closed cells of the obtained foam was 37 mmHg at 25°C when calculated in a manner similar to that in Example 1. The average cell diameter of the closed cells was about 60 µm.

The inflammability of the obtained foam was decreased as compared with that of Example 4, because amine fluoride was fixed on the surfaces of the closed cells of the foam, and its heat insulating performance was equivalent to that of Example 4.

### Example 6

In this example, concurrent molding and blowing was performed by employing a polymerizable monomer and heptafluoro-1-iodopropane (molecular weight: 295.92, boiling point: 39°C), one of the iodinated fluorohydrocarbons, as the reactive blowing agent D and the volatile compound having a molecular weight of 70 or larger and a boiling point of 150°C or lower, respectively.

The ratio by weight of the employed materials was such that the polyol A/the foam stabilizer A/the catalyst A/a polymerization catalyst/the reactive blowing agent D/heptafluoro-1-iodopropane/polyisocyanate A = 100/3/2/3/30/12/180. As the reactive blowing agent D, vinylidene chloride (molecular weight: 96.95, boiling point: 31.7°C), one of the polymerizable monomers, was used, and as the polymerization catalyst, azobisisobutylonitrile was used, respectively. The proportion of heptafluoro-1-iodopropane to the polyol corresponded to 0.40 mole/kg.

First, a mixture of the polyol A, the catalyst A, the polymerization catalyst, the foam stabilizer A, the reactive blowing agent D and heptafluoro-1-iodopropane was combined with the polyisocyante A, and the combined mixed material for the resin was injected into a closable container composed of an outer housing made of a metal and an inner housing made of a resin. The concurrent molding and blowing was thus performed in the container under reduced pressure as in the case of Example 2. Thereafter, the container was once sealed and the polymerizable monomer was polymerized in a furnace kept at 70°C to form polyvinylidene chloride, thereby to yield the heat insulating foamed material composed of a hard urethane.

The vapor pressure of heptafluoro-1-iodopropane inside the closed cells of the thus obtained heat insulating foamed material was 82 mmHg at 25°C when calculated in a manner similar to that in Example 1. The average cell diameter of the closed cells was about 60 µm.

The obtained polyurethane foam showed an improved heat insulating performance by 17% as compared with the polyurethane foam of Comparative Example 1. Further, it demonstrated a more excellent nonfammability than that of Example 3.

### Example 7

In this example, water and cyclopentane were employed as the reactive blowing agent and the volatile compound having a molecular weight of 70 or larger and a boiling point of 150°C or lower which eventually became the filling gas, respectively. Before the concurrent molding and blowing, any gas dissolved in or adsorbed in the polyurethane precursors and confined inside a container in which the blowing was performed were substituted with carbon dioxide.

The ratio by weight of the employed materials was such that the polyol A/the foam stabilizer A/the catalyst A/water/cyclopentane/polyisocyanate A = 100/2/3/2/10/160. In addition to these, phenylglycidyl ether in 60 parts by weight for 100 parts by weight of the polyol and zinc iodide/tetrabutylammonium bromide (molar ratio = 1:4) in 5 parts by weight for 100 parts by weight of the polyol, were used as the epoxide compound and the carbon dioxide fixation catalyst, respectively. The amount of the employed cyclopentane corresponded to 1.4 mole for 1 kg of the polyol.

First, a mixture of the polyol A with the foam stabilizer A, the catalyst A, cyclopentane and water, the epoxide compound, and polyisocyanate were separately subjected to a pressure reducing step by means of a vacuum pump, followed by a bubbling with carbon dioxide, thereby to substitute the air dissolved in them with carbon dioxide. Subsequently, the air confined in the container wherein the blowing was performed was substituted with carbon dioxide in a similar manner.

Next, the mixture containing the polyol A was first combined with the epoxide compound and the combined mixture was further mixed with the polyisocyante A. The mixed material was injected into a closable container composed of an outer housing made of a metal and an inner housing made of a resin in a carbon dioxide atmosphere thereby to blow and mold concurrently. The vapor pressure of cyclopentane inside the closed cells of the thus obtained heat insulating foam, obtained by crushing the foam and calculated in a manner similar to that in Example 1 was 190 mmHg and the partial pressure of the carbon dioxide was 35 mmHg at 25°C. The average cell diameter of the closed cells was about 170 µm.

From the measurement of the heat insulating performance performed in a manner similar to that in Example 1, it was found that a substantially constant heat insulating characteristic was acquired 5 days after the manufacturing.

For comparison, a heat insulating foam was prepared in compliance with a prescription excluding epoxide compound. The heat insulating foam of this comparative example was found inferior by 11% in the heat insulating property to that of Example 7. The partial pressure of the carbon dioxide inside the closed cells of the comparative example was 420 mmHg at 25°C.

It was believed that the excellent heat insulating performance of the foam of this example was attributable to the fact that the efficiency of the carbon dioxide fixation was increased and thus the partial pressure of the carbon dioxide was lowered. A test on the nonflammability revealed that the foam of this example had a favorable nonflammability as compared with that of the comparative example.

Further, a similarly favorable heat insulating property and nonflammability were obtained in the case of employing glycerol diglycidyl ether in 40 parts by weight for 100 parts by weight of the polyol and zinc chloride/tetrabutylammonium iodide (molar ratio = 1:4) in 5 parts by weight for 100 parts by weight of the polyol, as the epoxide compound and the carbon dioxide fixation catalyst, respectively.

### Example 8

In this example, concurrent molding and blowing under reduced pressure was performed by employing water and cyclopentane as the reactive blowing agent and the volatile compound having a molecular weight of 70 or larger and a boiling point of 150°C or lower which eventually became the filling gas, respectively. Prior to the concurrent molding and blowing, any gas dissolved in or adsorbed in the polyurethane precursors and confined in a container in which the blowing was performed were substituted with carbon dioxide.

The ratio by weight of the employed materials was such that the polyol A/the foam stabilizer A/the catalyst A/water/cyclopentane/polyisocyanate A = 100/2/3/0.6/2.7/145.

In addition to these, phenylglycidyl ether in 30 parts by weight for 100 parts by weight of the polyol and zinc iodide/tetrabutylammonium bromide (molar ratio = 1:3) in 3.5 parts by weight for 100 parts by weight of the polyol were employed as the epoxide compound and the carbon dioxide fixation catalyst, respectively. The amount of the employed cyclopentane corresponded to 0.39 mole for 1 kg of the polyol.

First, a mixture of the polyol A, the foam stabilizer A, the catalyst A, cyclopentane and water, the epoxide compound, and polyisocyanate were separately subjected to a pressure reducing step by means of a vacuum pump and a bubbling with carbon dioxide, thereby to substitute the air dissolved in them with carbon dioxide. Subsequently, the air confined in the container wherein the blowing was performed was substituted with carbon dioxide in a similar manner.

Next, the mixture containing the polyol A was combined with the epoxide compound and then the combined mixture was further mixed with the polyisocyante A. The mixed material was injected into a closable container composed of an outer housing made of a metal and an inner housing made of a resin in a carbon dioxide atmosphere. A hard polyurethane foam was molded by blowing it in the container under reduced pressure as in Example 2.

The vapor pressure of the cyclopentane inside the closed cells of the thus obtained foam, obtained by crushing the foam and calculated in a manner similar to that in Example 1, was 70 mmHg and the partial pressure of the carbon dioxide was 4 mmHg at 25°C. The average cell diameter of the closed cells was about 180 µm.

From the measurement of the heat insulating performance performed in a manner similar to that in Example 1, it was found that a substantially constant heat insulating property was acquired 3 days after the manufacturing. The heat insulating property was more excellent by 2% as compared with that of Example 7. It was believed that the amount of employed water was lowered and the efficiency of the carbon dioxide fixation was raised and thus the partial pressure of the carbon dioxide was lowered, by virtue of the blowing under reduced pressure. A test on the nonflammability revealed that the foam had a favorable nonflammability as compared with that of Example 7, because of decreased amount of employed cyclopentane.

### Example 9

By causing silica fine particles (average particle diameter: 0.03 µm) to react with 1,2-epoxypropylmethyl dichlorosilane, the surfaces of the fine particles were modified with methyl groups and 1,2-epoxypropyl groups belonging to the carbon dioxide reactive groups. Then, a water-containing colloidal solution was prepared by dispersing one part by weight of the modified fine particles, 0.1 part by weight of tetrabutylammonium bromide as the addition reaction catalyst and one part by weight of water in 17 parts by weight of cyclopentane.

When a polyol composition was prepared by mixing 19.1 parts by weight of this water-containing colloidal solution with 100 parts by weight of the polyol A, 3 parts by weight of the foam stabilizer A and 3 parts by weight of the catalyst A, cyclopentane was made in a emulsion state in the polyol composition.

A heat insulating foam was obtained by mixing 125.1 parts by weight of this polyol composition with 138 parts by weight of the polyisocyanate, followed by blowing.

### Comparative Example 3

Another heat insulating foam for the purpose of comparison was obtained in a similar manner to Example 9 except for the addition of the fine particles whose surfaces were modified with methyl group and 1,2-epoxypropyl group.

### Evaluation

From the measurement of the heat insulating characteristics of these foams in a similar manner to Example 1, it was found that the heat insulating property of the foam of Example 9 was more excellent by 15% as compared with that of Comparative Example 3. The average cell diameter of the closed cells of Comparative Example 3 was about 220 µm, whereas that of Example 9 was about 120 µm.

It is believed that the improvement in the heat insulating performance obtained with Example 9 is attributable to the fixation of carbon dioxide and minimized diameter of the closed cells.

### Example 10

One part by weight of titanium oxide fine particles (average particle diameter: 0.02 µm), 0.1 part by weight of tetrabutylammonium bromide as an addition reaction catalyst and one part by weight of water were added to 17 parts by weight of cyclopentane which dissolved 0.1 part by weight of 11,12-epoxy stearic acid, one of the surfactants, and stirred at high speed to prepare a water-containing colloidal solution, wherein titanium oxide fine particles, whose surfaces were modified with 11,12-epoxy stearic acid, a carbon dioxide reactive group, were dispersed.

When a polyol composition was prepared by mixing 19.2 parts by weight of this water-containing colloidal solution with 100 parts by weight of the polyol A, 3 parts by weight of the foam stabilizer A and 3 parts by weight of the catalyst A, cyclopentane was made in a emulsion state in the polyol composition.

A heat insulating foam was obtained by mixing 125.2 parts by weight of this polyol composition with 138 parts by weight of the polyisocyanate, followed by blowing.

From the measurement of the heat insulating characteristic in a manner similar to that in Example 1, it was found that the heat insulating property of the foam of Example 10 was more excellent by 20% as compared with that of Comparative Example 3. The average cell diameter of the closed cells of Example 10 was about 130 µm.

It is believed that the improvement in the heat insulating performance obtained with this example is attributable to the fixation of carbon dioxide and minimized diameter of the closed cells.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

## Claims

1. A heat insulating foamed material having a multiplicity of closed cells in which a vapor of at least one volatile compound having a boiling point of 150°C or lower and a molecular weight of 70 or larger is filled at a pressure of 1mmHg or higher at 25°C, and inner wall surfaces of said closed cells comprise at least one member selected from the group consisting of:
(A) a halogenated hydrocarbon chain in an end residue state or a branched chain state as a product of fixing a reactive blowing agent, and
(B) an organic carbonate compound as a product of fixing carbon dioxide, and a carbon dioxide fixation catalyst.

2. A heat insulating foamed material in accordance with claim 1, wherein said organic carbonate compound is a cyclic carbonate, and said carbon dioxide fixation catalyst is at least one member selected from the group consisting of a metal halide and an onium salt.

3. A heat insulating foamed material in accordance with claim 1, wherein said volatile compound filled in said closed cells is at least one member selected from the group consisting of a cyclic hydrocarbon having from 5 to 6 carbon atoms, a highly fluorinated or perfluorinated fluorohydrocarbon having from 3 to 7 carbon atoms, a fluorinated ether having from 3 to 8 carbon atoms, a fluorinated tertiary amine having from 3 to 6 carbon atoms, and an iodinated fluorohydrocarbon having from 1 to 4 carbon atoms.

4. A heat insulating foamed material in accordance with claim 1, wherein a partial pressure of said carbon dioxide confined in said closed cells is 50 mmHg or lower at 25°C.

5. A heat insulating foamed material in accordance with claim 1, wherein a vapor pressure of said volatile compound confined in said closed cells is 100 mmHg or lower at 25°C.

6. A method for producing a heat insulating foamed material comprising the steps of:
concurrently mixing and blowing a polyurethane material, thereby to form a foamed polyurethane resin composition having a multiplicity of closed cells, containing at least one volatile compound having a boiling point of 150°C or lower and a molecular weight of 70 or larger and a reactive blowing agent, and
fixing said reactive blowing agent in said closed cells, thereby to obtain a foamed material, wherein inside spaces of said closed cells are substantially filled with a vapor of said volatile compound at a vapor pressure of 1 mmHg or higher at 25°C.

7. The method for producing a heat insulating material in accordance with claim 6, wherein a combination of said reactive blowing agent and its fixation reaction is at least one case selected from the group consisting of:
(A) a combination of an organic halide as the reactive blowing agent and a reaction for forming a halogenated hydrocarbon chain in an end residue state or a branched chain state as the fixation reaction of said organic halide, and
(B) a combination of carbon dioxide as the reactive blowing agent and a reaction of the carbon dioxide with an epoxide compound in the presence of a catalyst for forming an organic carbonate compound as the fixation reaction of said carbon dioxide.

8. The method for producing a heat insulating foamed material in accordance with claim 7, wherein said organic halide is a compound selected from the group consisting of a halogenated tertiary alcohol and a halogenated amine, and said fixation reaction is a reaction of said organic halide with polyisocyanate to form a halogenated hydrocarbon chain.

9. The method for producing a heat insulating foamed material in accordance with claim 7, wherein said organic halide is a halide having at least one carbon-to-carbon unsaturated bond, and said fixation reaction is a polymerization reaction of said organic halide to form a hydrocarbon chain.

10. The method for producing a heat insulating foamed material in accordance with claim 8 or 9, wherein said reactive blowing agent is encapsulated in microcapsules comprising cores of said reactive blowing agent itself and wall material of a thermoplastic resin, and is mixed with polyol.

11. The method for producing a heat insulating foamed material in accordance with claim 6, wherein the boiling point of said volatile compound is 115°C or lower, and the amount of said volatile compound added to polyol is in a range of 0.1 - 0.4 mole/kg, and said volatile compound is filled in said closed cells at a vapor pressure of 100 mmHg or lower at 25°C.

12. The method for producing a heat insulating foamed material in accordance with claim 6, wherein said concurrent mixing and blowing step is performed in a container, and an injection of said polyurethane material into said container is performed under an atmosphere of at least one member selected from the group consisting of xenon, krypton and carbon dioxide.

13. The method for producing a heat insulating foamed material in accordance with claim 12, wherein said polyurethane material is prepared by the step of a treatment of degassing the air dissolved in at least one of polyisocyanate, polyol and the blowing agent, or by the step of a substitution treatment with at least one species selected from the group consisting of carbon dioxide, xenon and krypton.

14. The method for producing a heat insulating foamed material in accordance with claim 6, wherein said polyurethane material comprises a polyol composition prepared by dispersing said volatile compound as a blowing core agent in a colloidal form, or fine particles having modified surfaces having an affinity for said reactive blowing agent.

15. The method for producing a heat insulating foamed material in accordance with claim 14, wherein said fine particles are particles having hydrophilic surfaces modified with a carboxylic acid and at least one salt selected from the group consisting of an alkylammonium salt, a metal salt of sulfonic acid, and a metal salt of carboxylic acid.

16. The method for producing a heat insulating foamed material in accordance with claim 14, wherein said fine particles are dispersed in said volatile compound in a colloidal form, and said volatile compound is dispersed in said polyol composition in an emulsion state.

17. The method for producing a heat insulating foamed material in accordance with claim 7, wherein said epoxide compound comprises fine particles whose surfaces are modified with a functional group including epoxy group, and said polyurethane material contains a polyol composition prepared by dispersing said epoxide compound in a colloidal form.

18. A method for producing a heat insulating foamed resin material comprising the steps of:
preparing a polyurethane raw material by mixing polyisocyanate with a polyol composition including at least a reactive blowing agent composed of an organic halide, at least one volatile compound having a boiling point of 150°C or lower and a molecular weight of 70 or larger, and a polyol,
injecting said polyurethane raw material into a container to form a hard polyurethane foamed material which has a multiplicity of closed cells filled with said reactive blowing agent and said volatile compound, and
allowing a fixation reaction of said reactive blowing agent to take place in the closed cells of said hard polyurethane foamed material to form halogenated hydrocarbon chains in an end residue state or a branched chain state on wall surfaces of said closed cells, thereby to obtain a foamed material whose closed cells are substantially filled with a vapor of said volatile compound at a vapor pressure of 1 mmHg or higher at 25°C.

19. A method for producing a heat insulating foamed material comprising the steps of:
preparing a polyurethane raw material by mixing polyisocyanate with a polyol composition including at least water, a volatile compound having a boiling point of 150°C or lower and a molecular weight of 70 or larger, an epoxide compound, a carbon dioxide fixation catalyst and a polyol,
injecting said polyurethane raw material into a container to form a hard polyurethane foamed material which includes urea bond and a multiplicity of closed cells filled with said volatile compound and carbon dioxide, and
allowing said carbon dioxide in said closed cells to react with said epoxide compound in the presence of said carbon dioxide fixation catalyst to form an organic carbonate compound on wall surfaces of said closed cells, thereby to obtain a foamed material whose closed cells are substantially filled with a vapor of said volatile compound at a vapor pressure of 1 mmHg or higher at 25°C.
